# EUROPEAN PATENT SPECIFICATION

(11) **EP 2 816 467 B1**
(45) Date of publication and mention of the grant of the patent: **11.05.2016**
(21) Application number: 12742473.7
(22) Date of filing: 15.03.2012
(51) Int. Cl.: G06F 9/44, G06F 11/14

(54) **METHOD AND DEVICE FOR CHECKPOINT AND RESTART OF CONTAINER STATE**
VERFAHREN UND ZUR VORRICHTUNG FÜR EINEN PRÜFPUNKT UND EINEN NEUSTART EINES BEHÄLTERSTATUS
PROCÉDÉ ET DISPOSITIF DESTINÉS AU POINT DE CONTRÔLE ET À LA REPRISE DE L'ÉTAT D'UN CONTENANT

(43) Date of publication of application: 24.12.2014
(73) Proprietor: Huawei Technologies Co., Ltd., Longgang District Shenzhen, Guangdong 518129 (CN)
(72) Inventor: YANG, Zhenzhang, Shenzhen Guangdong 518129 (CN); ZHAO, Qi, Shenzhen Guangdong 518129 (CN)
(74) Representative: Pfenning, Meinig & Partner mbB
(86) International application number: PCT/CN2012/072358
(87) International publication number: WO 2012/103827

(56) References cited:
- CN-A- 101 055 538
- CN-A- 101 256 526
- CN-A- 102 263 671
- US-A1- 2007 244 937
- US-A1- 2009 157 882
- US-B2- 7 634 687
- US-B2- 7 634 687

## Description

### TECHNICAL FIELD

Embodiments of the present invention relate to the field of computer technologies, and in particular, to a method and an apparatus for checkpointing and restarting a container status.

### BACKGROUND

A Linux container can provide lightweight virtualization, so as to isolate a group of processes and control resource utilization of the group of processes. A principle of the Linux container is that different system views are provided for different processes, inter-process isolation is implemented by using a Linux namespace mechanism, and processes in a same namespace can be mutually seen, mutually accessed and mutually communicated, where a namespace is a collection of resource localization and is formed by combining namespaces of a plurality of subsystems. For an object of each subsystem, an original and globally unique instance is localized into a plurality of instances, the plurality of instances does not interfere with each other, and one instance cannot access an element inside another instance.

In the prior art, a Linux container controls processes in the container to access hardware resources by using a control group (cgroup, control group) mechanism of a kernel in a Linux system. For example, if a central processing unit (CPU, Central Processing Unit) usage of a process A is limited to 20%, a cgroup with a CPU usage of 20% can be established, and then, when the process A is added to the established cgroup, the CPU usage of the process A can be controlled within 20%. Certainly, one cgroup may include a plurality of processes, and functions of the cgroup are mainly implemented by a subsystem of the cgroup. For example, the foregoing example is a subsystem that implements CPU usage control. Currently, functions that can be implemented by all subsystems of a cgroup include: limiting an input/output port (I/O Input/Output) of a block device, limiting a CPU usage, limiting an access right of a device, freezing or defreezing a container, limiting a memory size, limiting a memory node, and the like.

With the development of checkpoint/restart (checkpoint and restart) technologies, when a user maintains a system, a container usually needs to be checkpointed and restarted, including checkpointing and restarting a container status and an application program status in the container. Specifically, when a checkpoint/restart operation needs to be performed, a freezing subsystem in a Linux cgroup is used to perform a freezing operation on the container, so as to suspend execution of an application program in the container.

After the freezing is complete, at a checkpoint stage, a controller checkpoints a status parameter of the application program that runs in a first container to an image file of a shared memory, where the status parameter of the application program includes an application program accessible resource status and a kernel data status for controlling an application program behavior; and then at a restart stage, the controller reads the status parameter of the application program in the image file stored on the shared memory, and restarts the application program in a second container.

However, a checkpoint/restart operation in the prior art has a problem: at a restart stage, a resource limit of a process in a restarted container is lost, and an execution environment of the process in the container is inconsistent before and after the checkpoint/restart operation.

US7634687B2 discloses systems and methods of restarting programs upon failure. In particular, the systems and methods provide for generation of a checkpoint component including program execution status or completion data as well as state. This checkpoint component can then be employed by an execution engine to restart the program at a point in time captured by the checkpoint component. These systems and methods can be applied to a workflow system to facilitate restarting a workflow package or process described thereby.

US2009157882A1 discloses a system, method and computer program product for implementing network connection failover during application service interruption. While the application is quiesced, a network socket that terminates a network connection to a network peer is maintained on behalf of the application. The socket's network connection state information is sustained by providing acknowledgements of incoming network traffic to the network peer that prevent the peer from terminating the connection. Upon restart, the application is brought up with a blocked socket. The state of the blocked socket is conformed to a current network connection state of the original socket and the blocked socket is unblocked.

US2007244937A1 discloses a system and method for application fault tolerance and recover using topologically remotely located computing devices are provided. A primary computing device runs one instance of an application (i.e. the primary application instance) at a production site and an active standby computing device runs a second instance of the application (i.e. the shadow application instance) at a recovery site which may be topologically remotely located from the production site. The two instances of the application are brought into a consistent state by running an initial application "checkpoint" on the primary computing device followed by an application "restart" on the active standby computing device.; Events occurring in the primary application instance may be automatically and continuously recorded in a log and transferred to the recovery site using a peer-to-peer remote copy operation so as to maintain the states of the application instances consistent.

### SUMMARY

Embodiments of the present invention, which is defined in detail in the appended independent claims 1 and 6, provide a method and an apparatus for checkpointing and restarting a container status, which are used for performing a checkpoint/restart operation on a container status in a Linux system, so that an execution environment of a process in the container can be kept consistent before and after the checkpoint/restart operation.

A method for checkpointing and restarting a container status in linux system according to an embodiment of the present invention includes:
at a checkpoint stage, acquiring and checkpointing configuration information of a first container in linux system, a control group status parameter of the first container, and an application program status parameter of the first container; and
at a restart stage, reading the configuration information of the first container, the control group status parameter of the first container, and the application program status parameter of the first container, and configuring a second container in linux system according to the read configuration information of the first container, the read control group status parameter of the first container, and the read application program status parameter of the first container.

An apparatus for checkpointing and restarting a container status in linux system according to an embodiment of the present invention includes:
a checkpoint module, configured to, at a checkpoint stage, acquire and checkpoint configuration information of a first container in linux system, a control group status parameter of the first container, and an application program status parameter of the first container; and
a restart module, configured to, at a restart stage, read the configuration information of the first container, the control group status parameter of the first container, and the application program status parameter of the first container, and configure a second container in linux system according to the read configuration information of the first container, the read control group status parameter of the first container, and the read application program status parameter of the first container.

It can be learned from the foregoing technical solutions that the embodiments of the present invention have the following advantages:
At a checkpoint stage, configuration information of a first container in linux system, a control group status parameter of the first container, and an application program status parameter of the first container are acquired and checkpointed, so that a second container in linux system can be configured at a restart stage according to the checkpointed configuration information of the first container, the checkpointed control group status parameter of the first container, and the checkpointed application program status parameter of the first container. In this case, the second container can have the same configuration information as the configuration information of the first container, and a resource limit condition of a process in the second container is kept consistent before and after a checkpoint/restart operation, and an execution environment is kept unchanged.

### BRIEF DESCRIPTION OF DRAWINGS

FIG. 1 is a schematic diagram of a method for checkpointing and restarting a container status according to an embodiment of the present invention;
FIG. 2 is another schematic diagram of a method for checkpointing and restarting a container status according to an embodiment of the present invention;
FIG. 3 is a schematic diagram of an apparatus for checkpointing and restarting a container status according to an embodiment of the present invention; and
FIG. 4 is another schematic diagram of an apparatus for checkpointing and restarting a container status according to an embodiment of the present invention.

### DESCRIPTION OF EMBODIMENTS

Embodiments of the present invention provide a method and an apparatus for checkpointing and restarting a container status, which are used for performing a checkpoint/restart operation on a container status in a Linux system, so that an execution environment of a process in the container can be kept consistent before and after the checkpoint/restart operation.

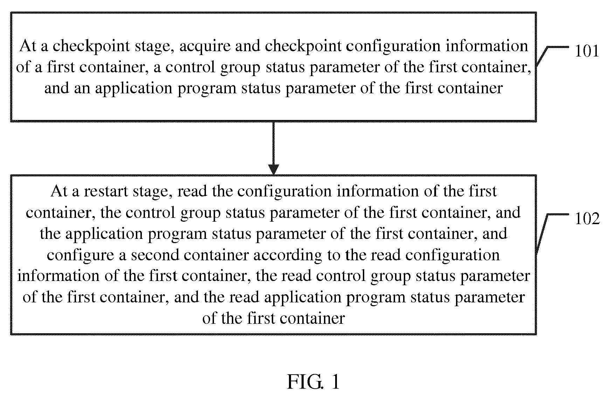

To better understand the technical solutions of the present invention, refer to FIG. 1. which shows an embodiment of a method for checkpointing and restarting a container status according to an embodiment of the present invention, where the method includes:
101. At a checkpoint stage, acquire and checkpoint configuration information of a first container, a control group status parameter of the first container, and an application program status parameter of the first container.

In this embodiment of the present invention, when an application program runs in the first container, if a checkpoint/restart operation needs to be performed on the application program, a controller may perform a freezing operation on the first container by using a freezing subsystem in the first container, so as to suspend the application program in the first container.

After the freezing operation is complete, the checkpoint stage is entered. At the checkpoint stage, the controller acquires and checkpoints the configuration information of the first container, the control group status parameter of the first container, and the application program status parameter of the first container, where
the configuration information of the first container includes: an execution area of the first container, the number of virtual terminals used by the first container, a root mount point of the first container, network configuration of the first container, a permission of the first container, a name of a current operating system of the first container, and the like; and
the application program status parameter of the first container includes an application program accessible resource status and a kernel data status for controlling an application program behavior. Specifically, the application program accessible resource status includes: a status of a file resource opened by the application program, memory information within an application program accessible linear address range, timer and signal information, and other information that may be obtained by the application program by means of system calling; and the kernel data status for controlling an application program behavior includes a process relationship and scheduling information of the application program, a security policy, permission and namespace information of the application program, and management information of application program visible resources.

102. At a restart stage, read the configuration information of the first container, the control group status parameter of the first container, and the application program status parameter of the first container, and configure a second container according to the read configuration information of the first container, the read control group status parameter of the first container, and the read application program status parameter of the first container.
In this embodiment of the present invention, at the restart stage, the controller reads the configuration information of the first container, the control group status parameter of the first container, and the application program status parameter of the first container, configures the second container according to the read configuration information of the first container, the read control group status parameter of the first container, and the read application program status parameter of the first container, and implement restart of the application program in the second container.

It should be noted that, in this embodiment of the present invention, "first" and "second" in a first container and a second container are merely used for distinguishing two different containers, but not constitute a limitation on the containers.

In this embodiment of the present invention, at a checkpoint stage, configuration information of a first container, a control group status parameter of the first container, and an application program status parameter of the first container are acquired and checkpointed, so that, at a restart stage, the checkpointed configuration information of the first container, the checkpointed control group status parameter of the first container, and the checkpointed application program status parameter of the first container can be read, a second container is configured according to the read configuration information of the first container, the read control group status parameter of the first container, and the read application program status parameter of the first container, and the restart of the application program is implemented in the second container. The configuration information and the control group status parameter of the first container are configured in the second container, so that configuration information of the second container and a resource limit condition of a process in the second container are consistent with the configuration information in the first container and a resource limit condition of a process in the first container before a checkpoint/restart operation, and an execution environment of a process in the container is kept consistent before and after the checkpoint/restart operation.

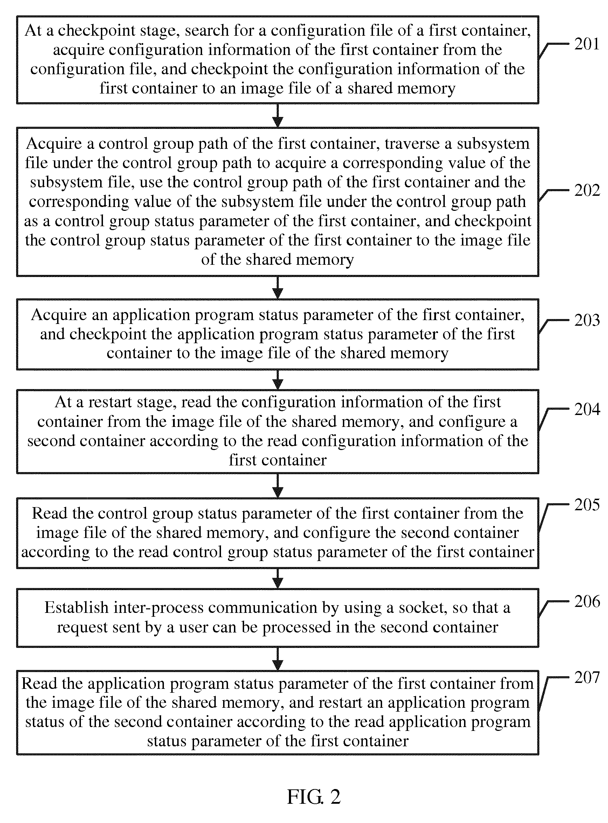

To better understand the method for checkpointing and restarting a container status according to an embodiment of the present invention, the following provides more detailed description. Refer to FIG. 2 which shows an embodiment of a method for checkpointing and restarting a container status according to an embodiment of the present invention, where the method includes:
201. At a checkpoint stage, search for a configuration file of a first container, acquire configuration information of the first container from the configuration file, and checkpoint the configuration information of the first container to an image file of a shared memory.
   In this embodiment of the present invention, at the checkpoint stage, a controller searches for the configuration file of the first container, acquires the configuration information of the first container from the configuration file, and checkpoints the configuration information of the first container to the image file of the shared memory, where the checkpointed configuration information includes an execution area of the first container, the number of virtual terminals used by the first container, a root mount point of the first container, network configuration of the first container, a permission of the first container, a name of a current operating system of the first container, and the like.
202. Acquire a control group path of the first container, traverse a subsystem file under the control group path to acquire a corresponding value of the subsystem file, use the control group path of the first container and the corresponding value of the subsystem file under the control group path as a control group status parameter of the first container, and checkpoint the control group status parameter of the first container to the image file of the shared memory.
   After the configuration information is checkpointed, the controller acquires the control group path of the first container, traverses the subsystem file under the control group path to acquire the corresponding value of the subsystem file, uses the control group path of the first container and the corresponding value of the subsystem file under the control group path as the control group status parameter of the first container, and checkpoints the control group status parameter of the first container to the image file of the shared memory.
   In this embodiment of the present invention, a subsystem under the control group path includes a block device I/O limiting subsystem, a CPU node limiting subsystem, a CPU usage limiting subsystem, a device access permission limiting subsystem, a freezing or defreezing subsystem, a memory size limiting subsystem, and a memory node limiting subsystem.
203. Acquire an application program status parameter of the first container, and checkpoint the application program status parameter of the first container to the image file of the shared memory.
   In this embodiment of the present invention, the controller acquires the application program status parameter of the first container, and checkpoints the application program status parameter of the first container to the image file of the shared memory, where the application program status parameter of the first container includes an application program accessible resource status and a kernel data status for controlling an application program behavior. Specifically, the application program accessible resource status includes: a status of a file resource opened by the application program, memory information within an application program accessible linear address range, timer and signal information, and other information that may be obtained by the application program by means of system calling; and the kernel data status for controlling an application program behavior includes a process relationship and scheduling information of the application program, a security policy, permission and namespace information of the application program, and management information of application program visible resources.
204. At a restart stage, read the configuration information of the first container from the image file of the shared memory, and configure a second container according to the read configuration information of the first container.
   In this embodiment of the present invention, after the checkpoint stage ends, the restart stage is entered, and the controller reads the configuration information of the first container from the image file of the shared memory, and configures the second container according to the read configuration information of the first container.
   It should be noted that, in this embodiment of the present invention, the second container may be a newly established container, and the configuring the second container by using the configuration information of the first container may specifically be that the controller configures the second container by calling a corresponding function according to a different type of configuration information. For example, if an execution area of a second container is configured, a personality function may be called.
205. Read the control group status parameter of the first container from the image file of the shared memory, and configure the second container according to the read control group status parameter of the first container.
   In this embodiment of the present invention, after configuring the configuration information of the second container is complete, the controller reads the control group status parameter of the first container from the image file of the shared memory and configures the second container according to the read control group status parameter of the first container.
   In this embodiment of the present invention, the control group status parameter of the first container includes the control group path of the first container and the corresponding value of the subsystem file under the control group path; and the configuring the second container by using the control group status parameter of the first container specifically includes: reading the control group status parameter of the first container in the image file of the shared memory, establishing a subsystem file in the second container according to the control group path in the control group status parameter, and writing the corresponding value of the subsystem file under the control group path of the first container into a corresponding subsystem file established in the second container.
206. Establish inter-process communication by using a socket, so that a request sent by a user can be processed in the second container.
   In this embodiment of the present invention, for a purpose that the second container can process the request sent by the user, the controller may establish the inter-process communication by using the socket to listen to the request of the user, where the request of the user includes a request for freezing and defreezing a container, a request for viewing status information of a container, a request for stopping running of a container, a request for setting and/or acquiring a resource limit status in a container, and the like; and after receiving the request of the user, the second container performs processing according to a processing method corresponding to the request, and feeds a processing result back to the user.
   In this embodiment of the present invention, the establishing inter-process communication by using a socket specifically includes that the controller establishes the socket in the second container, waits for a connecting request of a user side, and if the connecting request of the user side is received, performs corresponding processing according to data included in the connecting request. For example, if a user side requests for acquiring a current container status of a second container, the controller feeds a current container status parameter of the second container to the user side.
207. Read the application program status parameter of the first container from the image file of the shared memory, and restart an application program status in the second container according to the read application program status parameter of the first container.
   In this embodiment of the present invention, the controller further reads the application program status parameter of the first container from the image file of the shared memory, and restarts the application program status in the second container according to the read application program status parameter of the first container.
   In this embodiment of the present invention, configuration information and a control group status parameter of a first container are configured in a second container, so that configuration information of the second container and a resource limit condition of a process in the second container keep consistent with the configuration information in the first container and a resource limit condition of a process in the first container before a checkpoint/restart operation. In addition, at a restart stage, inter-process communication is established by using a socket, so that the second container can process a request sent by a user, and the user may interact with a container by sending the request, thereby facilitating management of a user.

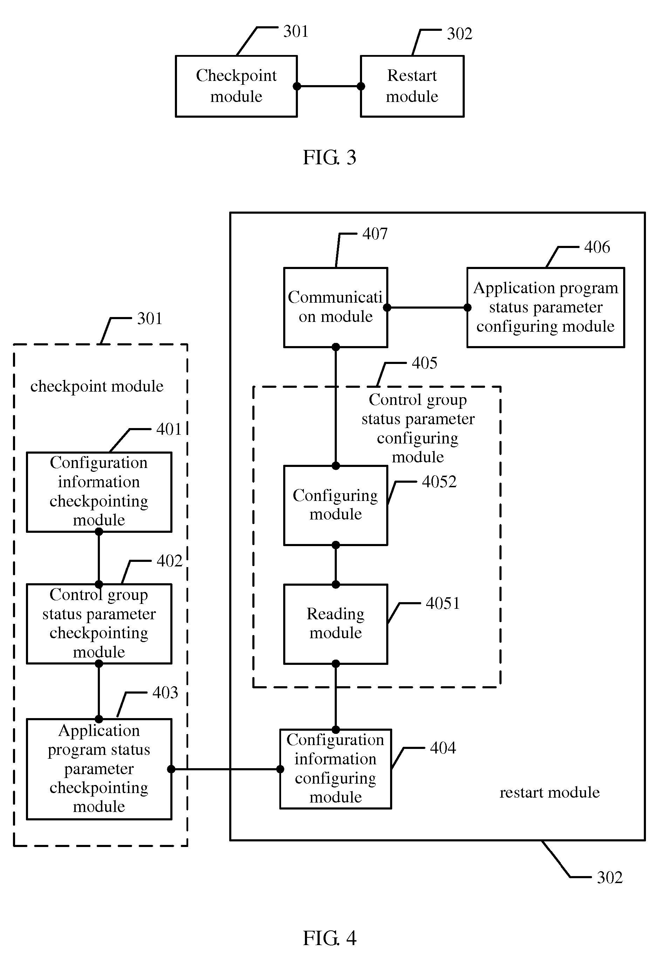

Refer to FIG. 3 which is an embodiment of an apparatus for checkpointing and restarting a container status according to an embodiment of the present invention, where the apparatus includes:
a checkpoint module 301, configured to, at a checkpoint stage, acquire and checkpoint configuration information of a first container, a control group status parameter of the first container, and an application program status parameter of the first container; and
a restart module 302, configured to, at a restart stage, read the configuration information of the first container, the control group status parameter of the first container, and the application program status parameter of the first container, and configure a second container according to the read configuration information of the first container, the read control group status parameter of the first container, and the read application program status parameter of the first container.

In this embodiment of the present invention, at a checkpoint stage, a checkpoint module 301 checkpoints acquired configuration information of a first container, an acquired control group status parameter of the first container, and an acquired application program status parameter of the first container; and at a restart stage, a restart module 302 reads the configuration information of the first container, the control group status parameter of the first container, the application program status parameter of the first container, and configures a second container according to the read configuration information of the first container, the read control group status parameter of the first container, and the read application program status parameter of the first container. The configuration information and the control group status parameter of the first container are configured in the second container, so that configuration information of the second container and a resource limit condition of a process in the second container keep consistent with the configuration information in the first container and a resource limit condition of a process in the first container before a checkpoint/restart operation.

To better describe the apparatus in this embodiment of the present invention, refer to FIG. 4 which shows an embodiment of an apparatus for checkpointing and restarting a container status according to an embodiment of the present, where the apparatus includes:
the checkpoint module 301 and the restart module 302 in the embodiment shown in FIG. 3, of which content is consistent with content described in the embodiment shown in FIG. 3, and details are not described herein again.

In this embodiment of the present invention, the checkpoint module 301 includes:
a configuration information checkpointing module 401, configured to search for a configuration file of a first container, acquire configuration information of the first container from the configuration file, and checkpoint the configuration information of the first container to an image file of a shared memory;
a control group status parameter checkpointing module 402, configured to acquire a control group path of the first container, traverse a subsystem file under the control group path to acquire a corresponding value of the subsystem file, use the control group path of the first container and the corresponding value of the subsystem file under the control group path as a control group status parameter of the first container, and checkpoint the control group status parameter of the first container to the image file of the shared memory; and
an application program status parameter checkpointing module 403, configured to acquire an application program status parameter of the first container, and checkpoints the application program status parameter of the first container to the image file of the shared memory.

In this embodiment of the present invention, the restart module 302 includes:
a configuration information configuring module 404, configured to, at a restart stage, read the configuration information of the first container from the image file of the shared memory, and configure a second container according to the read configuration information of the first container;
a control group status parameter configuring module 405, configured to read the control group status parameter of the first container from the image file of the shared memory, and configure the second container according to the read control group status parameter of the first container; and
an application program status parameter configuring module 406, configured to read the application program status parameter of the first container from the image file of the shared memory, and restarts an application program status in the second container according to the read application program status parameter of the first container.

The control group status parameter configuring module 405 includes:
a reading module 4051, configured to read the control group status parameter in the image file of the shared memory, where the control group status parameter includes the control group path of the first container and the corresponding value of the subsystem file under the control group path;
a configuring module 4052, configured to establish a subsystem file in the second container according to the control group path, and write the corresponding value of the subsystem file under the control group path of the first container into a corresponding subsystem file established in the second container.

The restart module in this embodiment of the present invention further includes:
a communication module 407, configured to establish inter-process communication by using a socket, so that the second container can process a request sent by a user.

In this embodiment of the present invention, at the checkpoint stage, the configuration information checkpointing module 401 in the checkpoint module 301 searches for the configuration file of the first container, acquires the configuration information of the first container from the configuration file, and checkpoints the configuration information of the first container to the image file of the shared memory; the control group status parameter checkpointing module 402 acquires the control group path of the first container, traverses the subsystem file under the control group path to acquire the corresponding value of the subsystem file, uses the control group path of the first container and the corresponding value of the subsystem file under the control group path as the control group status parameter of the first container, and checkpoints the control group status parameter of the first container to the image file of the shared memory; and finally, the application program status parameter checkpointing module 403 acquires the application program status parameter of the first container, and checkpoints the application program status parameter of the first container to the image file of the shared memory.

In this embodiment of the present invention, after the checkpoint stage ends, at the restart stage, the configuration information configuring module 404 in the restart module reads the configuration information of the first container from the image file of the shared memory, and configures the second container according to the read configuration information of the first container; then, the control group status parameter configuring module 405 reads the control group status parameter of the first container from the image file of the shared memory, and configures the second container according to the read control group status parameter of the first container; then, the communication module 407 establishes the inter-process communication by using the socket, so that the second container can process the request sent by the user; and finally, the application program status parameter configuring module 406 reads the application program status parameter of the first container from the image file of the shared memory, and restarts the application program status in the second container according to the read application program status parameter of the first container.

In this embodiment of the present invention, a specific method for configuring the second container by the control group status parameter configuring module 405 includes: reading, by the reading module 4051, the control group status parameter from the image file of the shared memory, where the control group status parameter includes the control group path of the first container and the corresponding value of the subsystem file under the control group path; and establishing, by the configuring module 4052, the subsystem file in the second container according to the control group path, and writing the corresponding value of the subsystem file under the control group path of the first container into a corresponding subsystem file in the second container.

In this embodiment of the present invention, configuration information and a control group status parameter of a first container are configured in a second container, so that configuration information of the second container and a resource limit condition of a process in the second container keep consistent with the configuration information in the first container and a resource limit condition of a process in the first container before a checkpoint/restart operation. In addition, at a restart stage, inter-process communication is established by using a socket, so that the second container can process a request sent by a user, and the user may interact with a container by sending the request, thereby facilitating management of a user.

It should be noted that the apparatus for checkpointing and restarting a container status according to the embodiments shown in FIG. 3 and FIG. 4 may be a controller in a Linux system, where the controller can acquire a container status from the container, checkpoints the container status to a shared memory, and reads the container status from the shared memory, thereby implementing the checkpoint/restart operation.

A person of ordinary skill in the art may understand that all or a part of the steps of the methods in the embodiments may be implemented by a program instructing relevant hardware. The program may be stored in a computer readable storage medium. The storage medium mentioned above may be a read-only memory, a magnetic disk, an optical disc, or the like.

The foregoing describes the method and the apparatus for checkpointing and restarting a container status in detail according to the present invention. However, content of the specification shall not be construed as a limitation on the present invention.

## Claims

1. A method for checkpointing and restarting a container status in a linux system, comprising:
at a checkpoint stage, acquiring (101) and checkpointing configuration information of a first container in a linux system, a control group status parameter of the first container, and an application program status parameter of the first container; and
at a restart stage, reading (102) the configuration information of the first container, the control group status parameter of the first container, and the application program status parameter of the first container, and configuring a second container in a linux system according to the read configuration information of the first container, the read control group status parameter of the first container, and the read application program status parameter of the first container.

2. The method according to claim 1, wherein the acquiring and checkpointing configuration information of a first container in a linux system, a control group status parameter of the first container, and an application program status parameter of the first container, comprises:
Searching (201) for a configuration file of the first container, acquiring the configuration information of the first container from the configuration file, and checkpointing the configuration information of the first container to an image file of a shared memory;
Acquiring (202) a control group path of the first container, traversing a subsystem file under the control group path to acquire a corresponding value of the subsystem file, using the control group path of the first container and the corresponding value of the subsystem file under the control group path as the control group status parameter of the first container, and checkpointing the control group status parameter of the first container to the image file of the shared memory; and
Acquiring (203) the application program status parameter of the first container, and checkpointing the application program status parameter of the first container to the image file of the shared memory.

3. The method according to claim 2, wherein the step of: at a restart stage, reading the configuration information of the first container, the control group status parameter of the first container, and the application program status parameter of the first container, and configuring a second container in a linux system according to the read configuration information of the first container, the read control group status parameter of the first container, and the read application program status parameter of the first container, comprises:
at the restart stage, reading (204) the configuration information of the first container from the image file of the shared memory, and configuring the second container according to the read configuration information of the first container;
reading (205) the control group status parameter of the first container from the image file of the shared memory, and configuring the second container according to the read control group status parameter of the first container; and
reading (207) the application program status parameter of the first container from the image file of the shared memory, and restarting an application program status in the second container according to the read application program status parameter of the first container.

4. The method according to claim 3, wherein the reading the control group status parameter of the first container from the image file of the shared memory, and configuring the second container according to the read control group status parameter of the first container, comprises:
reading the control group status parameter of the first container in the image file of the shared memory, wherein the control group status parameter comprises the control group path of the first container and the corresponding value of the subsystem file under the control group path; and
establishing a subsystem file in the second container according to the control group path, and writing the corresponding value of the subsystem file under the control group path of the first container into a corresponding subsystem file established in the second container.

5. The method according to claim 3, wherein after the reading the control group status parameter of the first container from the image file of the shared memory, and configuring the second container according to the read control group status parameter of the first container, the method further comprises:
establishing (206) inter-process communication by using a socket, so that a request sent by a user can be processed in the second container.

6. An apparatus for checkpointing and restarting a container status in a linux system, comprising:
a checkpoint module (301), configured to, at a checkpoint stage, acquire and checkpoint configuration information of a first container in a linux system, a control group status parameter of the first container, and an application program status parameter of the first container; and
a restart module (302), configured to, at a restart stage, read the configuration information of the first container, the control group status parameter of the first container, and the application program status parameter of the first container, and configure a second container in a linux system according to the read configuration information of the first container, the read control group status parameter of the first container, and the read application program status parameter of the first container.

7. The apparatus according to claim 6, wherein the checkpoint module comprises:
a configuration information checkpointing module (401), configured to search for a configuration file of the first container, acquire the configuration information of the first container from the configuration file, and checkpoint the configuration information of the first container to an image file of a shared memory;
a control group status parameter checkpointing module (402), configured to acquire a control group path of the first container, traverse a subsystem file under the control group path to acquire a corresponding value of the subsystem file, use the control group path of the first container and the corresponding value of the subsystem file under the control group path as the control group status parameter of the first container, and checkpoint the control group status parameter of the first container to the image file of the shared memory; and
an application program status parameter checkpointing module (403), configured to acquire the application program status parameter of the first container, and checkpoint the application program status parameter of the first container to the image file of the shared memory.

8. The apparatus according to claim 6, wherein the restart module comprises:
a configuration information configuring module (404), configured to, at the restart stage, read the configuration information of the first container from an image file of a shared memory, and configure the second container according to the read configuration information of the first container;
a control group status parameter configuring module (405), configured to read the control group status parameter of the first container from the image file of the shared memory, and configure the second container according to the read control group status parameter of the first container; and
an application program status parameter configuring module (406), configured to read the application program status parameter of the first container from the image file of the shared memory, and restart the application program status in the second container according to the read application program status parameter of the first container.

9. The apparatus according to claim 8, wherein the control group status parameter configuring module (405) comprises:
a reading module (4051), configured to read the control group status parameter from the image file of the shared memory, wherein the control group status parameter comprises a control group path of the first container and a corresponding value of a subsystem file under the control group path; and
a configuring module (4052), configured to establish a subsystem file in the second container according to the control group path, and write the corresponding value of the subsystem file under the control group path of the first container into a corresponding subsystem file established in the second container.

10. The apparatus according to claim 8 or 9, wherein the restart module further comprises:
a communication module (407), configured to establish inter-process communication by using a socket, so that the second container can process a request sent by a user.

## Patentansprüche

1. Verfahren für ein "Checkpointing" (eine Prüfpunktsicherung) und einen Neustart eines Behälterstatus in einem Linux-System, aufweisend:
an einer Prüfpunktstufe, Erlangen (101) und "Checkpointing" von Konfigurationsinformationen eines ersten Behälters in einem Linux-System, eines Steuergruppenstatusparameters des ersten Behälters und eines Anwendungsprogrammstatusparameters des ersten Behälters; und
an einer Neustartstufe, Lesen (102) der Konfigurationsinformationen des ersten Behälters, des Steuergruppenstatusparameters des ersten Behälters und des Anwendungsprogrammstatusparameters des ersten Behälters und Konfigurieren eines zweiten Behälters in einem Linux-System gemäß den gelesenen Konfigurationsinformationen des ersten Behälters, dem gelesenen Steuergruppenstatusparameter des ersten Behälters und dem gelesenen Anwendungsprogrammstatusparameter des ersten Behälters.

2. Verfahren nach Anspruch 1, wobei das Erlangen und "Checkpointing" von Konfigurationsinformationen eines ersten Behälters in einem Linux-System, eines Steuergruppenstatusparameters des ersten Behälters und eines Anwendungsprogrammstatusparameters des ersten Behälters Folgendes aufweist:
Suchen (201) nach einer Konfigurationsdatei des ersten Behälters, Erlangen der Konfigurationsinformationen des ersten Behälters aus der Konfigurationsdatei und "Checkpointing" der Konfigurationsinformationen des ersten Behälters in einer Bilddatei eines gemeinsam benutzten Speichers;
Erlangen (202) eines Steuergruppenpfades des ersten Behälters, Durchqueren einer Subsystemdatei unter dem Steuergruppenpfad zum Erlangen eines entsprechenden Wertes der Subsystemdatei, Verwenden des Steuergruppenpfades des ersten Behälters und des entsprechenden Wertes der Subsystemdatei unter dem Steuergruppenpfad als Steuergruppenstatusparameter des ersten Behälters, und "Checkpointing" des Steuergruppenstatusparameters des ersten Behälters in der Bilddatei des gemeinsam benutzten Speichers; und
Erlangen (203) des Anwendungsprogrammstatusparameters des ersten Behälters und "Checkpointing" des Anwendungsprogrammstatusparameters des ersten Behälters in der Bilddatei des gemeinsam benutzten Speichers.

3. Verfahren nach Anspruch 2, wobei der Schritt: an einer Neustartstufe, Lesen der Konfigurationsinformationen des ersten Behälters, des Steuergruppenstatusparameters des ersten Behälters und des Anwendungsprogrammstatusparameters des ersten Behälters und Konfigurieren eines zweiten Behälters in einem Linux-System gemäß den gelesenen Konfigurationsinformationen des ersten Behälters, dem gelesenen Steuergruppenstatusparameter des ersten Behälters und dem gelesenen Anwendungsprogrammstatusparameter des ersten Behälters, Folgendes aufweist:
an der Neustartstufe, Lesen (204) der Konfigurationsinformationen des ersten Behälters aus der Bilddatei des gemeinsam benutzten Speichers und Konfigurieren des zweiten Behälters gemäß den gelesenen Konfigurationsinformationen des ersten Behälters;
Lesen (205) des Steuergruppenstatusparameters des ersten Behälters aus der Bilddatei des gemeinsam benutzten Speichers und Konfigurieren des zweiten Behälters gemäß dem gelesenen Steuergruppenstatusparameter des ersten Behälters; und
Lesen (207) des Anwendungsprogrammstatusparameters des ersten Behälters aus der Bilddatei des gemeinsam benutzten Speichers und Neustarten eines Anwendungsprogrammstatus im zweiten Behälter gemäß dem gelesenen Anwendungsprogrammstatusparameter des ersten Behälters.

4. Verfahren nach Anspruch 3, wobei das Lesen des Steuergruppenstatusparameters des ersten Behälters aus der Bilddatei des gemeinsam benutzten Speichers und Konfigurieren des zweiten Behälters gemäß dem gelesenen Steuergruppenstatusparameter des ersten Behälters Folgendes aufweist:
Lesen des Steuergruppenstatusparameters des ersten Behälters in der Bilddatei des gemeinsam benutzten Speichers, wobei der Steuergruppenstatusparameter den Steuergruppenpfad des ersten Behälters und den entsprechenden Wert der Subsystemdatei unter dem Steuergruppenpfad Folgendes aufweist; und
Erstellen einer Subsystemdatei im zweiten Behälter gemäß dem Steuergruppenpfad und Schreiben des entsprechenden Wertes der Subsystemdatei unter dem Steuergruppenpfad des ersten Behälters in eine entsprechende Subsystemdatei, die im zweiten Behälter erstellt ist.

5. Verfahren nach Anspruch 3, wobei nach dem Lesen des Steuergruppenstatusparameters des ersten Behälters aus der Bilddatei des gemeinsam benutzten Speichers und Konfigurieren des zweiten Behälters gemäß dem gelesenen Steuergruppenstatusparameter des ersten Behälters, das Verfahren ferner Folgendes aufweist:
Erstellen (206) einer Interprozesskommunikation durch Verwendung einer Buchse, so dass eine Anfrage, die von einem Benutzer gesendet wird, im zweiten Behälter bearbeitet werden kann.

6. Vorrichtung für ein "Checkpointing" (eine Prüfpunktsicherung) und einen Neustart eines Behälterstatus in einem Linux-System, aufweisend:
ein Prüfpunktmodul (301), das konfiguriert ist zum Erlangen und "Checkpointing" an einer Prüfpunktstufe von Konfigurationsinformationen eines ersten Behälters in einem Linux-System, eines Steuergruppenstatusparameters des ersten Behälters und eines Anwendungsprogrammstatusparameters des ersten Behälters; und
ein Neustartmodul (302), das konfiguriert ist zum Lesen an einer Neustartstufe der Konfigurationsinformationen des ersten Behälters, des Steuergruppenstatusparameters des ersten Behälters und des Anwendungsprogrammstatusparameters des ersten Behälters und Konfigurieren eines zweiten Behälters in einem Linux-System gemäß den gelesenen Konfigurationsinformationen des ersten Behälters, dem gelesenen Steuergruppenstatusparameter des ersten Behälters und dem gelesenen Anwendungsprogrammstatusparameter des ersten Behälters.

7. Vorrichtung nach Anspruch 6, wobei das Prüfpunktmodul Folgendes aufweist:
ein Konfigurationsinformationen-Prüfpunktmodul (401), das konfiguriert ist zum Suchen nach einer Konfigurationsdatei des ersten Behälters, Erlangen der Konfigurationsinformationen des ersten Behälters aus der Konfigurationsdatei und "Checkpointing" der Konfigurationsinformationen des ersten Behälters in einer Bilddatei eines gemeinsam benutzten Speichers;
ein Steuergruppenstatusparameter-Prüfpunktmodul (402), das konfiguriert ist zum Erlangen eines Steuergruppenpfades des ersten Behälters, Durchqueren einer Subsystemdatei unter dem Steuergruppenpfad zum Erlangen eines entsprechenden Wertes der Subsystemdatei, Verwenden des Steuergruppenpfades des ersten Behälters und des entsprechenden Wertes der Subsystemdatei unter dem Steuergruppenpfad als Steuergruppenstatusparameter des ersten Behälters und "Checkpointing" des Steuergruppenstatusparameters des ersten Behälters in einer Bilddatei des gemeinsam benutzten Speichers; und
ein Anwendungsprogrammstatusparameter-Prüfpunktmodul (403), das konfiguriert ist zum Erlangen des Anwendungsprogrammstatusparameters des ersten Behälters und "Checkpointing" des Anwendungsprogrammstatusparameters des ersten Behälters in der Bilddatei des gemeinsam benutzten Speichers.

8. Vorrichtung nach Anspruch 6, wobei das Neustartmodul Folgendes aufweist:
ein Konfigurationsinformationen-Konfigurationsmodul (404), das konfiguriert ist zum Lesen an der Neustartstufe der Konfigurationsinformationen des ersten Behälters aus einer Bilddatei eines gemeinsam benutzten Speichers und Konfigurieren des zweiten Behälters gemäß den gelesenen Konfigurationsinformationen des ersten Behälters;
ein Steuergruppenstatusparameter-Konfigurationsmodul (405), das konfiguriert ist zum Lesen des Steuergruppenstatusparameters des ersten Behälters aus der Bilddatei des gemeinsam benutzten Speichers und Konfigurieren des zweiten Behälters gemäß dem gelesenen Steuergruppenstatusparameter des ersten Behälters; und
ein Anwendungsprogrammstatusparameter-Konfigurationsmodul (406), das konfiguriert ist zum Lesen des Anwendungsprogrammstatusparameters des ersten Behälters aus der Bilddatei des gemeinsam benutzten Speichers und Neustarten des Anwendungsprogrammstatus im zweiten Behälter gemäß dem gelesenen Anwendungsprogrammstatusparameter des ersten Behälters.

9. Vorrichtung nach Anspruch 8, wobei das Steuergruppenstatusparameter-Konfigurationsmodul (405) Folgendes aufweist:
ein Lesemodul (4051), das konfiguriert ist zum Lesen des Steuergruppenstatusparameters aus der Bilddatei des gemeinsam benutzten Speichers, wobei der Steuergruppenstatusparameter einen Steuergruppenpfad des ersten Behälters und einen entsprechenden Wert einer Subsystemdatei unter dem Steuergruppenpfad Folgendes aufweist; und
ein Konfigurationsmodul (4052), das konfiguriert ist zum Erstellen einer Subsystemdatei im zweiten Behälter gemäß dem Steuergruppenpfad und Schreiben des entsprechenden Wertes der Subsystemdatei unter dem Steuergruppenpfad des ersten Behälters in eine entsprechende Subsystemdatei, die im zweiten Behälter erstellt ist.

10. Vorrichtung nach Anspruch 8 oder 9, wobei das Neustartmodul ferner Folgendes aufweist:
ein Kommunikationsmodul (407), das konfiguriert ist zum Erstellen einer Interprozesskommunikation durch Verwendung einer Buchse, so dass der zweite Behälter eine Anfrage, die von einem Benutzer gesendet wird, bearbeiten kann.

## Revendications

1. Procédé de création de points de contrôle et de redémarrage d'un état de conteneur dans un système d'exploitation Linux, comprenant :
l'acquisition (101), à une étape de création de points de contrôle, et la création de points de contrôle d'informations de configuration d'un premier conteneur dans un système d'exploitation Linux, d'un paramètre d'état de groupe de contrôle du premier conteneur et d'un paramètre d'état de programme d'application du premier conteneur, et
la lecture (102), à une étape de redémarrage, des informations de configuration du premier conteneur, du paramètre d'état de groupe de contrôle du premier conteneur et du paramètre d'état de programme d'application du premier conteneur, et la configuration d'un second conteneur dans un système d'exploitation Linux en fonction des informations de configuration lues du premier conteneur, du paramètre d'état de groupe de contrôle lu du premier conteneur et du paramètre d'état de programme d'application lu du premier conteneur.

2. Procédé selon la revendication 1, dans lequel l'acquisition et la création de points de contrôle d'informations de configuration d'un premier conteneur dans un système d'exploitation Linux, d'un paramètre d'état de groupe de contrôle du premier conteneur et d'un paramètre d'état du programme d'application du premier conteneur, comprennent :
la recherche (201) d'un fichier de configuration du premier conteneur, l'acquisition des informations de configuration du premier conteneur à partir du fichier de configuration, et la création de points de contrôle des informations de configuration du premier conteneur vers un fichier image d'une mémoire partagée,
l'acquisition (202) d'un trajet de groupe de contrôle du premier conteneur, la traversée d'un fichier de sous-système sous le trajet de groupe de contrôle afin d'acquérir une valeur correspondante du fichier de sous-système, l'utilisation du trajet de groupe de contrôle du premier conteneur et de la valeur correspondante du fichier de sous-système sous le trajet de groupe de contrôle comme paramètre d'état de groupe de contrôle du premier conteneur, et la création de points de contrôle du paramètre d'état de groupe de contrôle du premier conteneur vers le fichier image de la mémoire partagée, et
l'acquisition (203) du paramètre d'état de programme d'application du premier conteneur et la création de points de contrôle du paramètre d'état de programme d'application du premier conteneur vers le fichier image de la mémoire partagée.

3. Procédé selon la revendication 2, dans lequel l'étape de lecture, à une étape de redémarrage, des informations de configuration du premier conteneur, du paramètre d'état de groupe de contrôle du premier conteneur et du paramètre d'état de programme d'application du premier conteneur, ainsi que la configuration d'un second conteneur dans un système d'exploitation Linux en fonction des informations de configuration lues du premier conteneur, du paramètre d'état de groupe de contrôle lu du premier conteneur et du paramètre d'état de programme d'application lu du premier conteneur comprennent :
la lecture (204), à l'étape de redémarrage, des informations de configuration du premier conteneur à partir du fichier image de la mémoire partagée, et la configuration du second conteneur en fonction des informations de configuration lues du premier conteneur,
la lecture (205) du paramètre d'état de groupe de contrôle du premier conteneur à partir du fichier image de la mémoire partagée, et la configuration du second conteneur en fonction du paramètre d'état de groupe de contrôle lu du premier conteneur, et
la lecture (207) du paramètre d'état de programme d'application du premier conteneur à partir du fichier image de la mémoire partagée, et le redémarrage d'un état de programme d'application dans le second conteneur en fonction du paramètre d'état de programme d'application lu du premier conteneur.

4. Procédé selon la revendication 3, dans lequel la lecture du paramètre d'état de groupe de contrôle du premier conteneur à partir du fichier image de la mémoire partagée et la configuration du second conteneur en fonction du paramètre d'état de groupe de contrôle lu du premier conteneur comprennent :
la lecture du paramètre d'état de groupe de contrôle du premier conteneur dans le fichier image de la mémoire partagée, le paramètre d'état de groupe de contrôle comprenant le trajet de groupe de contrôle du premier conteneur et la valeur correspondante du fichier de sous-système sous le trajet de groupe de contrôle, et
l'établissement d'un fichier de sous-système dans le second conteneur en fonction du trajet de groupe de contrôle, et l'écriture de la valeur correspondante du fichier de sous-système sous le trajet de groupe de contrôle du premier conteneur dans un fichier de sous-système correspondant établi dans le second conteneur.

5. Procédé selon la revendication 3, comprenant en outre, après la lecture du paramètre d'état de groupe de contrôle du premier conteneur à partir du fichier image de la mémoire partagée, et la configuration du second conteneur en fonction du paramètre d'état de groupe de contrôle lu du premier conteneur:
l'établissement (206) d'une communication entre traitements en utilisant un connecteur logiciel de telle sorte qu'une demande envoyée par un utilisateur peut être traitée dans le second conteneur.

6. Appareil de création de points de contrôle et de redémarrage d'un état de conteneur dans un système d'exploitation Linux, comprenant :
un module de création de points de contrôle (301) configuré pour, à une étape de création de points de contrôle, acquérir et créer des points de contrôle d'informations de configuration d'un premier conteneur dans un système d'exploitation Linux, d'un paramètre d'état de groupe de contrôle du premier conteneur et d'un paramètre d'état de programme d'application du premier conteneur, et
un module de redémarrage (302) configuré pour lire, à une étape de redémarrage, les informations de configuration du premier conteneur, le paramètre d'état de groupe de contrôle du premier conteneur et le paramètre d'état de programme d'application du premier conteneur, et pour configurer un second conteneur dans un système d'exploitation Linux en fonction des informations de configuration lues du premier conteneur, du paramètre d'état de groupe de contrôle lu du premier conteneur et du paramètre d'état de programme d'application lu du premier conteneur.

7. Appareil selon la revendication 6, dans lequel le module de création de points de contrôle comprend :
un module de création de points de contrôle d'informations de configuration (400) configuré pour rechercher un fichier de configuration du premier conteneur, pour acquérir les informations de configuration du premier conteneur à partir du fichier de configuration et pour créer des points de contrôle des informations de configuration du premier conteneur vers un fichier image d'une mémoire partagée,
un module de création de points de contrôle de paramètre d'état de groupe de contrôle (402) configuré pour acquérir un trajet de groupe de contrôle du premier conteneur, pour traverser un fichier de sous-système sous le trajet de groupe de contrôle afin d'acquérir une valeur correspondante du fichier de sous-système, pour utiliser le trajet de groupe de contrôle du premier conteneur et la valeur correspondante du fichier de sous-système sous le trajet de groupe de contrôle comme paramètre d'état de groupe de contrôle du premier conteneur, et pour créer des points de contrôle du paramètre d'état de groupe de contrôle du premier conteneur vers le fichier image de la mémoire partagée, et
un module de création de points de contrôle de paramètre d'état de programme d'application (403) configuré pour acquérir le paramètre d'état de programme d'application du premier conteneur et pour créer des points de contrôle du paramètre d'état de programme d'application du premier conteneur vers le fichier image de la mémoire partagée.

8. Appareil selon la revendication 6, dans lequel le module de redémarrage comprend :
un module de configuration d'informations de configuration (404) configuré pour lire, à l'étape de redémarrage, les informations de configuration du premier conteneur à partir d'un fichier image d'une mémoire partagée, et pour configurer le second conteneur en fonction des informations de configuration lues du premier conteneur, un module de configuration de paramètre d'état de groupe de contrôle (405) configuré pour lire le paramètre d'état de groupe de contrôle du premier conteneur à partir du fichier image de la mémoire partagée, et pour configurer le second conteneur en fonction du paramètre d'état de groupe de contrôle lu du premier conteneur, et
un module de configuration de paramètre d'état de programme d'application (406) configuré pour lire le paramètre d'état de programme d'application du premier conteneur à partir du fichier image de la mémoire partagée, et pour redémarrer l'état du programme d'application dans le second conteneur en fonction du paramètre d'état de programme d'application lu du premier conteneur

9. Appareil selon la revendication 8, dans lequel le module de configuration de paramètre d'état de groupe de contrôle (405) comprend :
un module de lecture (4051) configuré pour lire le paramètre d'état de groupe de contrôle à partir du fichier image de la mémoire partagée, le paramètre d'état de groupe de contrôle comprenant un trajet de groupe de contrôle du premier conteneur et une valeur correspondante d'un fichier de sous-système sous le trajet de groupe de contrôle, et
un module de configuration (4052) configuré pour établir un fichier de sous-système dans le second conteneur en fonction du trajet de groupe de contrôle, et pour écrire la valeur correspondante du fichier de sous-système sous le trajet du groupe de contrôle du premier conteneur dans un fichier de sous-système correspondant établi dans le second conteneur.

10. Appareil selon la revendication 8 ou 9, dans lequel le module de redémarrage comprend en outre :
un module de communication (407) configuré pour établir une communication entre traitements en utilisant un connecteur logiciel de telle sorte que le second conteneur puisse traiter une demande envoyée par un utilisateur.
